# EUROPEAN PATENT SPECIFICATION

(11) **EP 3 645 382 B1**
(45) Date of publication and mention of the grant of the patent: **01.10.2025**
(21) Application number: 18823958.6
(22) Date of filing: 28.06.2018
(51) Int. Cl.: B63B 27/14

(54) **REMOVABLE FLAP SECTION FOR SHIP RAMP**
ENTFERNBARER KLAPPENTEIL FÜR SCHIFFSRAMPE
SECTION DE RABAT AMOVIBLE POUR PASSERELLE DE NAVIRE

(30) Priority: 30.06.2017 SE 1750865
(43) Date of publication of application: 06.05.2020
(73) Proprietor: Macgregor Sweden AB, 400 40 Göteborg (SE)
(72) Inventor: LINDER, Mats, 416 80 Göteborg (SE); GÖTVALL, David, 433 32 Partille (SE)
(74) Representative: Bergenstråhle & Partners AB
(86) International application number: PCT/SE2018/050705
(87) International publication number: WO 2019/004921

(56) References cited:
- WO-A1-2014/182173
- FR-A1- 2 527 187
- GB-A- 1 269 951
- GB-A- 2 071 021
- JP-A- S57 191 185
- JP-U- S6 135 096
- JP-U- S6 135 096
- US-A- 5 033 146
- US-A1- 2005 081 775

## Description

### TECHNICAL FIELD

The present disclosure relates to a removable flap section for a flap of a ship access ramp. A flap section may be replaced in an easy way when it is damaged or worn. The disclosure further relates to a method for mounting a flap section on a ship access ramp.

### BACKGROUND ART

Ships adapted to carry vehicles of some kind are referred to as roll-on/roll-off (Ro-Ro) ships. A Ro-Ro ship is a vessel designed to carry wheeled cargo, such as cars, trucks, semi-trailer trucks, trailers, and railroad cars, that are driven on and off the ship on their own wheels or using a platform vehicle, such as a self-propelled modular transporter.

Ro-Ro ships have either built-in or shore-based ramps that allow the cargo to be efficiently rolled on and off the ship when landing the cargo in a port. Most large ships have built-in ramps, which may also function as watertight doors, closing the interior of the ship. A ramp may be located in the stern, in the bow or in a side, or may be located in more than one location. There may also be various ramps installed inside a ship, to allow vehicles to move between different levels of the ship.

There are different types of ramps, adapted to the use of the ramp and on the location on the ship. A ramp may be controlled by hydraulic cylinders or by wires. Common for all ramps is that the end region of the ramp, the part of the ramp that will be in contact with the support ground, comprises at least one hinged flap, and most commonly the ramp will comprise a plurality of hinged flaps, arranged side by side. The flaps are adapted to compensate for different heights of the ground and for uneven grounds. A flap may be between 1 to 3 meters wide, and the width of a flap is normally in the region of 2 meters. For a flap installed internally in a ship, where the support surface is even, the ramp may comprise a single flap covering the complete width of the ramp. Such a flap may be up to 10 meters wide. A flap is made of steel and is at the outer edge relatively thin, such that a vehicle can drive over the edge without problems. The edge should therefore be less than 2 cm high, and preferably less than that.

One problem with the flaps is that they make noise when a vehicle drives over the flap. Since the ground is not completely flat, the flap does only bear against the ground in some points. The flap will thus tilt some when a vehicle drives on it, which creates noise. This may be a problem, especially for ships landing in city centres, where noise levels may be regulated by law. A further problem with the created noise is the working environment for the ship crew and for the vehicle drivers, especially for the drivers that drives trailers onto the ship. They pass the flaps constantly for several hours.

Another problem is that the flaps crack at the edge region. This wear is caused partly by the uneven ground and partly by fatigue of the metal material. The flaps must thus be repaired by welding, and parts of a flap may have to be cut away and replaced with another part that is welded in place. This is a heavy work and takes time.

In JPS 61 35 096 a flap with a flap section addressing the above problem is disclosed, whereby new problems, such as mounting of the flap section and lowered comfort due to gaps in the flap surface is derived. Further prior art flap sections are disclosed in US 2005/081775 A1, JP S57 191185 A and US 5 033 146 A.

There is thus room for an improved flap design.

### SUMMARY

An object of the disclosure is therefore to provide a removable flap section for a flap comprised in a ship access ramp. A further object of the disclosure is to provide a flap for a ship access ramp. A still further object of the disclosure is to suggest a method to mount a flap section on a ship access ram.

The solution to the problem according to the disclosure is described in claim 1. Claim 9 contains an advantageous flap. The other claims contain advantageous embodiments and further developments of the flap section, the flap and a ramp comprising said flap.

In a flap section for a flap comprised in a ship access ramp, comprising a front end region and a rear end region, where the height of the rear end region is greater than the height of the front end region, the object of the invention is achieved in that the flap section is flexible and that the flap section is adapted to be removably attached to a flap.

The flap section is provided with at least one connecting hole extending from the rear end region of the flap section into the flap section. The at least one connecting hole extends into the flap section essentially perpendicular to a rear edge of the rear end region.

The flap is provided with an upper side and a lower side, which connects a rear side at the rear end region with a front side at the front end region, such that the flap becomes a wedge shape.

The at least one connecting hole extends into the flap section essentially perpendicular to the rear side of the flap section.

By this first embodiment of the flap section according to the invention, a flap section that reduces created noise and that is easy to replace is provided. With such a flap section, the noise induced by a vehicle driving on to the ramp is reduced considerably. The width of a flap section is smaller than the width of a flap, such that e.g. 3 - 5 flap sections make up the width of a flap. For a ramp having a single flap, up to 10 flap sections or more may be used. This will also allow the flap to better adjust to the ground, since each flap section will be able to bear on the ground. Since the flap section is flexible, the complete flap section will bear on the ground when a vehicle drives over the flap section. This will further reduce the force acting on a vehicle driving over the edge of a flap section. By a conventional flap, a vehicle may be damaged when driving over the edge of the flap, since the distance between the flap edge and the ground may be relatively large at some points of the flap.

A flap section is also easy to replace if it is damaged. Since a flap section is only the outer part of a flap, and since the width is reduced when compared with a flap, a flap section may be handled by one person. Even if a flap section is relatively large, two persons will be able to handle it. This makes the replacement of a flap section easy and quick, which means that a ship must not be taken out of traffic when a flap has to be repaired. The flap section is made from a flexible material, such as rubber or a plastic material. The flap section is preferably moulded. By moulding the flap section, it is possible to provide the upper side of the flap section with a non-slip pattern. The non-slip pattern may be longitudinal transverse ribs protruding from the surface. The weight of the flap section is preferably less than 50 kg, and more preferred less than 25 kg. A further advantage of using flap sections made from a plastic material is that weight is saved.

The flap section is preferably attached to a flap by at least one rod member, such as a bolt, a threaded member, a threaded bolt or the like, which is provided to extend in the direction from the rear end region to the front end region. A corresponding connecting hole is thereby provided in the flap section into which the rod member can be attached.

According to the invention, to enable an attachment of the flap section to the flap with a rod member, the flap section is provided with at least one connecting hole. The connecting hole extends from the rear end region 3 into the flap section 1.

According to the invention, the connecting hole extends from a rear side of the flap section into the flap section and between the upper and the lower surface of the flap.

The connecting hole is adapted to receive a rod member for enabling an attachment to a flap. The connecting hole can be pre-formed during moulding of the flap member or be provided through an after treatment such as drilling. The connecting hole can be provide to have a tight fit to a rod member to be provided therein, or be provided to have a slightly larger circumference than a rod member to be provided therein.

In one example of the flap section, it is provided with a plurality of connecting holes.

The at least one connecting hole extending into the flap section enables an easy mounting of the flap section to the ship ramp. Rod members can be inserted from the back of the flaps, directly into the flap section, which also enables a transition from the flap section to the flap with a minimal gap between the flap section and the flap, due to that no attaching means needs to be arranged in-between the flap section and the flap. All bolting or form fitting of e.g. an attachment rod can be provided inside the flap section and below the surface of the flap instead of in-between them.

Through the at least one connecting hole, the flap section can be mounted to the front side of a flap by a rod member in any preferred way, in that a rod member is inserted into the connecting hole. The solution is flexible in that different attachment means, can be selected dependent on the needs of the application. A non-limiting variety of attachment means are screw connection, form fitting, shrink fitting and/or gluing with for example a two-component glue. Some non-limiting attachment means are presented in more detailed below.

In one example the flap section is attached with threaded members, such as threaded bolts or threaded rods. A corresponding threaded part may be provided in the flap section by either inserting a treaded part in a hole or by moulding a threaded part in or to the flap section.

According to the invention, the flap section is provided with an insert hole extending from the upper surface in direction towards the lower surface at the rear region of the flap section. The insert hole extends at least to the connecting hole, which thereby extends from the rear side of the flap section to the insert hole.

The insert hole enables a metal insert comprising a thread to be provide in the insert hole. A threaded rod can thereby be engaged with the thread of the metal insert through the connecting hole.

In one example, the flap section is attached with form fitted rod members. A form fitted rod member is provided with a groove and/or protrusion, whereby the connecting hole of the flap section is provided with a corresponding protrusion and/or groove, which is provided to engage with their respective counterpart when the rod members is inserted into the connecting holes.

In one example the flap section is provided with rod members which are moulded into the flap section. The rod members extends from the rear side of the flap section in direction towards the front side and protrudes out of the rear side of the flap section to provide an attachment means of the flap section to a flap.

A flap section is preferably provided with a transverse upper recess and a transverse lower recess in its rear end region. The upper recess is adapted to cooperate with an upper flange of the flap and the lower recess is adapted to cooperate with a lower flange of the flap. This will provide a secure hold of the flap section and will reduce forces acting on the threaded mounting members from vehicles driving on the flap section. The rear side is arranged in-between the transverse upper recess and the transverse lower recess.

### BRIEF DESCRIPTION OF DRAWINGS

The invention will be described in greater detail in the following, with reference to the embodiments that are shown in the attached drawings, in which
- Fig. 1: shows an upper view of a flap section according to the invention,
- Fig. 2: shows a side view of a flap section according to the invention,
- Fig. 3: shows an upper view of a flap section according to the invention provided with mounting holes,

- Fig. 4: shows a cut view of another example of a flap section not covered by claim 1,
- Fig. 5: shows a cut view of a flap section according to the invention mounted to a flap, and
- Fig. 6: shows a flap provided with a plurality of flap sections according to the invention.

### MODES FOR CARRYING OUT THE INVENTION

The embodiments of the invention with further developments described in the following are to be regarded only as examples and are in no way to limit the scope of the protection provided by the patent claims.

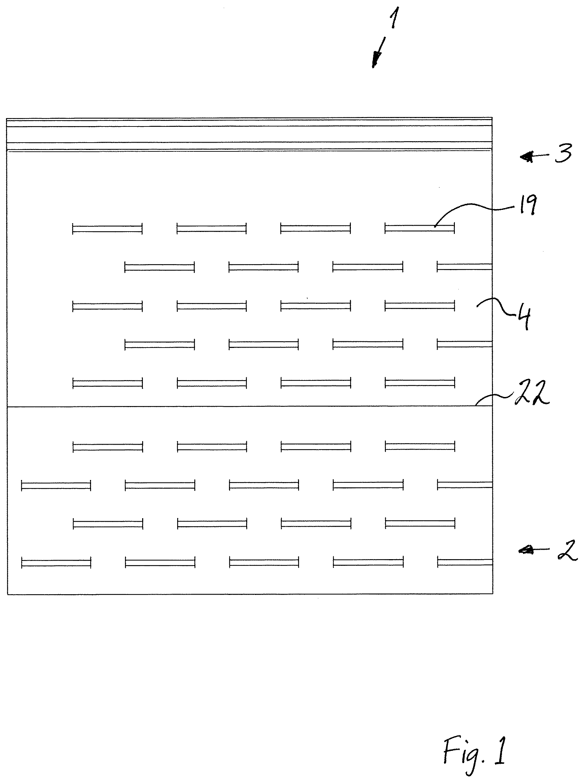

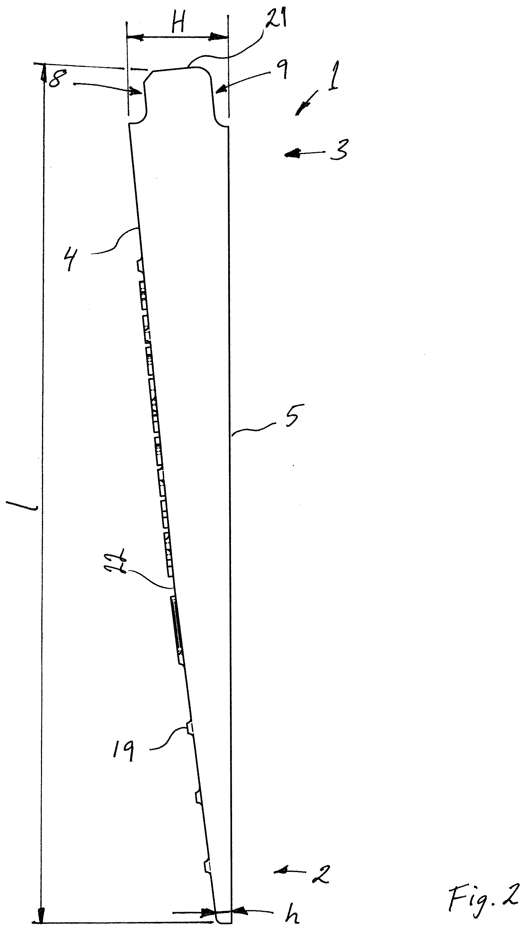

Fig. 1 shows an upper view of a flap section 1 according to the invention, and Fig. 2 shows a side view of a flap section. The flap section 1 is in the shown example moulded from a plastic material, but it would also be possible to produce a flap section in rubber, or to use a two component production method, with a stiffer inner material and a softer outer material. It would also be possible to produce a flap section by extruding a plastic profile, and to cut it in parts having a required length.

The flap section 1 is provided with an upper surface 4 and a lower surface 5. The upper surface is here provided with a non-slip pattern adapted for both vehicles and for pedestrians consisting of transverse protruding ribs 19. Other patterns are also possible to use, such as a chevron pattern or circular studs. The lower surface is preferably flat, but could also be provided with some kind of surface pattern. It is also possible to provide the lower surface with voids in order to save weight. It is however important that the voids does not reduce the stability of the flap section.

The flap section is further provided with a front end region 2 and a rear end region 3. The front end region will make up the outer part of the flap and is the region which a vehicle will hit first when driving on the flap. The height h of the front end region is thus the lowest part of the flap section. The rear end region is the end of the flap section which is adapted to be mounted to the flap of the ramp. The height H of the rear end region is thus the highest part of the flap section. The rear end region 3 is provided with a transverse upper recess 8 and a transverse lower recess 9. The upper recess 8 is adapted to cooperate with an upper flange of the flap and the lower recess 9 is adapted to cooperate with a lower flange of the flap. This will provide a secure hold of the flap section and will reduce forces acting on the threaded mounting members from vehicles driving on the flap section. The length l of a flap section may vary and is adapted to the dimensions of the flap on which it is to be mounted. A suitable length may be between 0,4 to 0,9 m. The angle between the upper surface and the lower surface will also depend on the flap on which it is to be mounted, but an angle less than 10 degrees is suitable. For a longer flap section, there may be two different angles divided by an incline line 22, where the front part may have a sloping angle of e.g. 7 degrees and the rear part has a sloping angle of e.g. 4 degrees. The sloping angle of the rear part may correspond to the sloping angle of the flap.

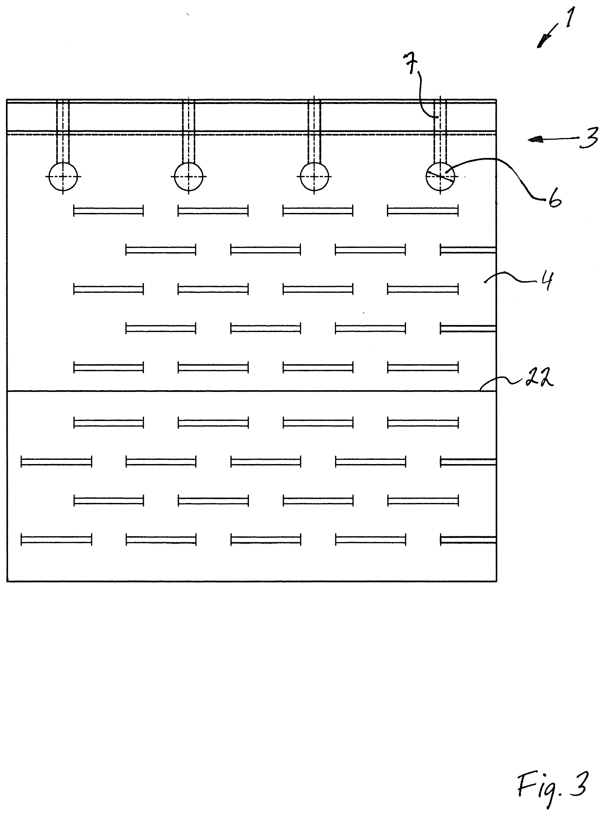

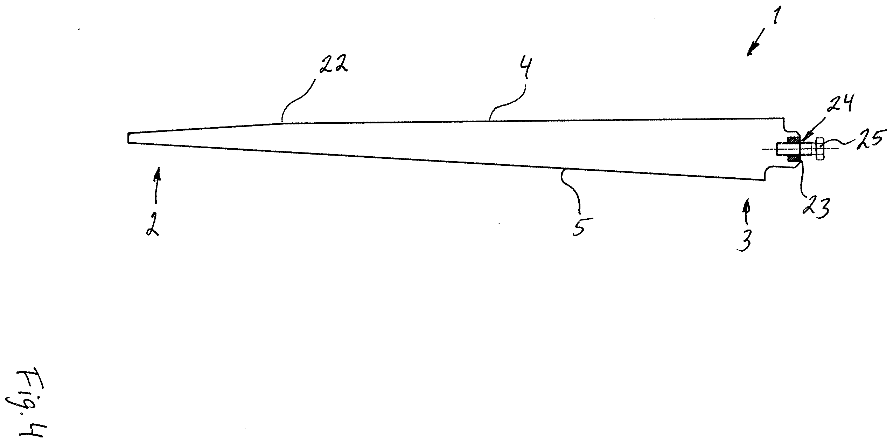

The attachment of a flap section to a flap is for example made by threaded members. In the example shown in Fig. 3, the flap section 1 is provided with an insert hole and a connecting hole 7. The insert hole 6 is drilled through the rear end region of the flap section, extending from the upper surface in direction towards the lower surface. The insert hole 6 can be provided as a through hole or be provided to have a depth lesser than the thickness of the flap section as long as the insert holes extends down to the connecting hole. A connecting hole 7 is then drilled from the rear side 21 of the flap section to the insert hole 6. The respective holes can also be drilled in the reversed order. It is also possible to mould the respective holes at the same time as the flap section is moulded. It is however an advantage to drill the respective holes afterwards, since different flaps may require different hole patterns. This will allow a ship to only have one type of flap section spare part, and to drill the holes as required. A threaded insert 13 is adapted to be inserted in the insert hole 6. Fig. 4 shows an example of a flap section not covered by claim 1 where a metal member 23 comprising a threaded hole 24 is integrated in the flap section during moulding. The metal member 23 may be a single nut or may be a longitudinal bar provided with a plurality of threaded holes 24 and having a fixed hole pattern. With this solution, the flap section is attached to the flap with bolts 25.

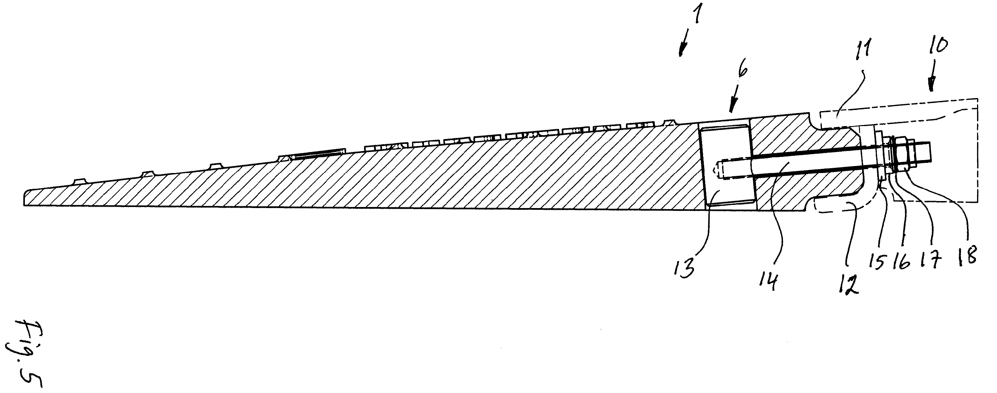

Fig. 5 shows an example of a flap section 1 mounted to a flap 10. The flap 10 comprises an upper flange 11 and a lower flange 12. The upper flange may be part of the upper surface of the flap. The flap section 1 is provided with an insert 13 in the insert hole 6. A threaded rod 14 is attached to the insert 13. The threaded rod 14 runs through a hole in the front part of the flap, arranged between the upper flange and the lower flange. On the threaded rod are then arranged a plain washer 15, a concave washer 16, a convex washer 17 and a nut 18. The nut is tightened properly, such that the rear side 21 of the flap section bear against the flap but without deforming the insert holes 6. The use of a concave washer and a convex washer allows the flap section to tilt somewhat without damaging the threaded rod. The upper surface of the flap will coincide with the upper surface of the flap section.

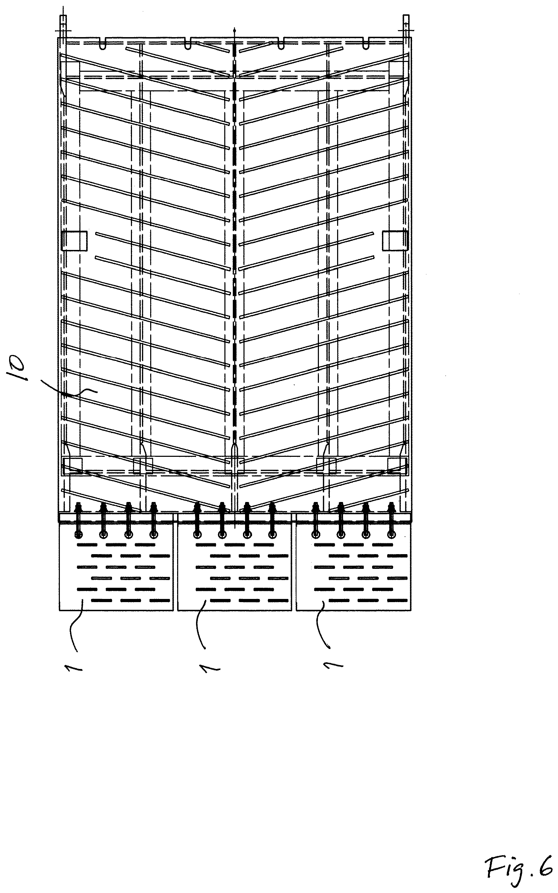

The lower flange 12 is preferably provided with a first and second section in an L-shape. The lower flange 12 can thereby attached to the flap 10 with the first section protruding perpendicular from an underside of the flap 10 and the second section extending parallel with the flap 10 front end, to form a receiving compartment between the upper flange 11 and the lower flange 12. Fig. 6 shows a flap 10 provided with a plurality of flap sections 1, in this example three flap sections. The flap is part of a ship access ramp which comprises several flaps. Each flap section is attached to the flap with four threaded members, here three inserts and three threaded rods. Depending on the size of the flap section and on the flap, two to five threaded members may be used to attach a flap section to a flap. In the shown example, there is a small gap sideways between each flap section. This will allow each flap section to move freely such that each flap section will be able to adjust to the ground in a reliable way.

One advantage of the inventive flap section is that an existing flap can easily be modified to be used with flap sections. By cutting off the outer part of an existing flap, and by welding a second flange to the flap, flap sections can be attached to the flap. In this way, the ramp or the flap does not have to be replaced. For a broken flap, it is easier to modify a flap for the use with flap sections than to repair it.

In an exemplary method to mount the flap section 1 to a flap 10, is done by a method comprising the steps of:
- attaching the flap section 1 to a front region of the flap 10 by
- attaching at least one rod member 14 to the flap 10 and the flap section 1.

The rod member 14 is arranged to extend from the flap 10 and into the flap section 1 between an upper surface 11 and a lower surface 12 of the flap section 1.

In one example, the method further comprises at least one of the following,
- providing an insert hole (6) in the flap, and
- providing a connecting hole (7) in the flap.

By providing (by drilling, milling or other suitable method) the holes (6, 7), when needed, the position of the holes (6, 7) can be adjusted to the flap the flap section is to be attached to.

In one example, the method further comprise at least one of the following steps:
- removing a front end part of the flap 1,
- attaching a lower flange 12 to the front end part of the flap.

By using the above method existing stiff flaps 10 on a ship can be retrofitted with a flap section 1, to enhance the overall performance of the flap with the qualities of the flap section 1.

When removing a front end part of the flap 1, the front end part can be cut away with any suitable cutting method, it is however preferred that a method is chosen that leaves a relative clean cutting edge, to minimize the after treatment. The removed front end part of the flap 1 corresponds to the flap section 1 that will be attached to the flap instead of the removed front end part of the flap 1.

The lower flange 12 can be attached to the front end part of the flap with bolt, screws or other detachable attachment means, or be welded on the flap 10.

The flap section 10 can be attached to the flap 1 and the first section of the lower flange with any of the previous described attachment means.

The invention is not to be regarded as being limited to the embodiments described above, a number of additional variants and modifications being possible within the scope of the subsequent patent claims. The flap section may have any size and may be made from any suitable material. Other types of attachment means are also possible.

### REFERENCE SIGNS

- 1:: Flap section
- 2:: Front end region
- 3:: Rear end region
- 4:: Upper surface
- 5:: Lower surface
- 6:: Insert hole
- 7:: Connecting hole
- 8:: Upper recess
- 9:: Lower recess
- 10:: Flap
- 11:: Upper flange
- 12:: Lower flange
- 13:: Insert
- 14:: Threaded rod
- 15:: Plain washer
- 16:: Concave washer
- 17:: Convex washer
- 18:: Nut
- 19:: Rib
- 21:: Rear side
- 22:: Incline line
- 23:: Bar
- 24:: Threaded hole
- 25:: Bolt

## Claims

1. Flap section (1) for a flap (10) of a ship access ramp (20), comprising a front end region (2) and a rear end region (3), where the height of the rear end region (3) is greater than the height of the front end region (2) wherein the flap section (1) is flexible and the flap section (1) is adapted to be removably attached to a flap (10), the flap section (1) is provided with a plurality of connecting holes (7) extending from the rear end region (3) of the flap section (1) into the flap section (1), **characterized in that** the flap section (1) comprises a plurality of insert holes (6) arranged at the rear end region (3), and where each insert hole (6) extends at least to connect to the corresponding connecting hole (7) and that each insert hole (6) is provided with an insert (13), and that each insert (13) is provided with a threaded rod (14) extending through its corresponding connecting hole (7).

2. Flap section according to claim 1, wherein the at least one connecting hole (7) extends from the rear side (21) of the flap section (1).

3. Flap section according to claim 1 or 2, **characterizedin** that the flap section (1) is adapted to be attached to the flap (10) by a plurality of threaded members (13, 14).

4. Flap section according to any of the preceding claims, **characterized in that** the rear end region (3) comprises a transverse upper recess (8) and a transverse lower recess (9).

5. Flap section according to any of preceding claims, **characterized in that** the upper recess (8) is adapted to cooperate with an upper flange (11) of the flap (10), and that the lower recess (9) is adapted to cooperate with a lower flange (12) of the flap (10).

6. Flap section according to any of the preceding claims, **characterized in that** the upper surface (4) of the flap section (1) comprises a plurality of protruding transverse ribs (19).

7. Flap section according to any of claims 1 to 6, **characterized in that** the flap section comprises a bar (23) having at least one threaded hole (24), where the bar (23) is moulded to the flap section (1).

8. Flap section according to claim 7, **characterized in that** the bar (23) extends over the width of the flap section (1) and that the bar (23) comprises a plurality of threaded holes (24).

9. Flap (10) for a ship access ramp (20) comprising a plurality of flap sections (1) according to any of claims 1 to 8.

10. Flap according to claim 9, **characterized in that** the flap section (1) is attached to the flap (10) by the use of a concave washer (16) and a convex washer (17).

11. Ship access ramp (20), **characterized in that** the ramp comprises a plurality of flaps (10) according to claim 9 or 10.

## Patentansprüche

1. Klappenabschnitt (1) für eine Klappe (10) einer Schiffszugangsrampe (20), der einen vorderen Endbereich (2) und einen hinteren Endbereich (3) umfasst, wobei die Höhe des hinteren Endbereichs (3) größer ist als die Höhe des vorderen Endbereichs (2), wobei der Klappenabschnitt (1) flexibel ist und der Klappenabschnitt (1) dazu angepasst ist, abnehmbar an einer Klappe (10) angebracht zu sein, wobei der Klappenabschnitt (1) mit einer Vielzahl von Verbindungslöchern (7) versehen ist, die sich von dem hinteren Endbereich (3) des Klappenabschnitts (1) in den Klappenabschnitt (1) erstrecken, **dadurch gekennzeichnet, dass** der Klappenabschnitt (1) eine Vielzahl von Einsatzlöchern (6) umfasst, die an dem hinteren Endbereich (3) angeordnet sind, und wobei sich jedes Einsatzloch (6) mindestens erstreckt, um mit dem entsprechenden Verbindungsloch (7) zu verbinden, und dass jedes Einsatzloch (6) mit einem Einsatz (13) versehen ist, und dass jeder Einsatz (13) mit einer Gewindestange (14), der sich durch sein entsprechendes Verbindungsloch (7) erstreckt, versehen ist.

2. Klappenabschnitt nach Anspruch 1, wobei sich das mindestens eine Verbindungsloch (7) von der Rückseite (21) des Klappenabschnitts (1) erstreckt.

3. Klappenabschnitt nach Anspruch 1 oder 2, **dadurch gekennzeichnet , dass** der Klappenabschnitt (1) dazu angepasst ist, durch eine Vielzahl von Gewindeelementen (13, 14) an der Klappe (10) angebracht zu sein.

4. Klappenabschnitt nach einem der vorstehenden Ansprüche, **dadurch gekennzeichnet, dass** der hintere Endbereich (3) eine quer verlaufende obere Aussparung (8) und eine quer verlaufende untere Aussparung (9) umfasst.

5. Klappenabschnitt nach einem der vorstehenden Ansprüche, **dadurch gekennzeichnet, dass** die obere Aussparung (8) dazu angepasst ist, mit einem oberen Flansch (11) der Klappe (10) zusammenzuwirken, und dass die untere Aussparung (9) dazu angepasst ist, mit einem unteren Flansch (12) der Klappe (10) zusammenzuwirken.

6. Klappenabschnitt nach einem der vorstehenden Ansprüche, **dadurch gekennzeichnet, dass** die obere Oberfläche (4) des Klappenabschnitts (1) eine Vielzahl hervorstehender Querrippen (19) umfasst.

7. Klappenabschnitt nach einem der Ansprüche 1 bis 6, **dadurch gekennzeichnet, dass** der Klappenabschnitt eine Leiste (23) umfasst, die mindestens eine Gewindebohrung (24) aufweist, wobei die Leiste (23) an den Klappenabschnitt (1) angeformt ist.

8. Klappenabschnitt nach Anspruch 7, **dadurch gekennzeichnet, dass** sich die Leiste (23) über die Breite des Klappenabschnitts (1) erstreckt, und dass die Leiste (23) eine Vielzahl von Gewindelöchern (24) umfasst.

9. Klappe (10) für eine Schiffszugangsrampe (20), die eine Vielzahl von Klappenabschnitten (1) nach einem der Ansprüche 1 bis 8 umfasst.

10. Klappe nach Anspruch 9, **dadurch gekennzeichnet, dass** der Klappenabschnitt (1) unter Verwendung einer konkaven Unterlegscheibe (16) und einer konvexen Unterlegscheibe (17) an der Klappe (10) angebracht ist.

11. Schiffszugangsrampe (20), **dadurch gekennzeichnet, dass** die Rampe eine Vielzahl von Klappen (10) nach Anspruch 9 oder 10 umfasst.

## Revendications

1. Section de rabat (1) pour un rabat (10) d'une rampe d'accès de navire (20), comprenant une région d'extrémité avant (2) et une région d'extrémité arrière (3), dans laquelle la hauteur de la région d'extrémité arrière (3) est supérieure à la hauteur de la région d'extrémité avant (2), dans laquelle la section de rabat (1) est flexible et la section de rabat (1) est conçue pour être fixée de manière amovible à un rabat (10), la section de rabat (1) est dotée d'une pluralité de trous de connexion (7) s'étendant depuis la région d'extrémité arrière (3) de la section de rabat (1) dans la section de rabat (1), **caractérisée en ce que** la section de rabat (1) comprend une pluralité de trous d'insertion (6) agencés au niveau de la région d'extrémité arrière (3), et dans laquelle chaque trou d'insertion (6) s'étend au moins pour se connecter au trou de connexion correspondant (7) et **en ce que** chaque trou d'insertion (6) est doté d'un insert (13), et **en ce que** chaque insert (13) est doté d'une tige filetée (14) s'étendant à travers son trou de connexion correspondant (7).

2. Section de rabat selon la revendication 1, dans laquelle le au moins un trou de connexion (7) s'étend depuis le côté arrière (21) de la section de rabat (1).

3. Section de rabat selon la revendication 1 ou 2, **caractérisée en ce que** la section de rabat (1) est conçue pour être fixée au rabat (10) par une pluralité d'éléments filetés (13, 14).

4. Section de rabat selon l'une quelconque des revendications précédentes, **caractérisée en ce que** la région d'extrémité arrière (3) comprend un évidement supérieur transversal (8) et un évidement inférieur transversal (9).

5. Section de rabat selon l'une quelconque des revendications précédentes, **caractérisée en ce que** l'évidement supérieur (8) est conçu pour coopérer avec une bride supérieure (11) du rabat (10), et **en ce que** l'évidement inférieur (9) est conçu pour coopérer avec une bride inférieure (12) du rabat (10).

6. Section de rabat selon l'une quelconque des revendications précédentes, **caractérisée en ce que** la surface supérieure (4) de la section de rabat (1) comprend une pluralité de nervures transversales saillantes (19).

7. Section de rabat selon l'une quelconque des revendications 1 à 6, **caractérisée en ce que** la section de rabat comprend une barre (23) présentant au moins un trou fileté (24), la barre (23) étant moulée sur la section de rabat (1).

8. Section de rabat selon la revendication 7, **caractérisée en ce que** la barre (23) s'étend sur la largeur de la section de rabat (1) et **en ce que** la barre (23) comprend une pluralité de trous filetés (24).

9. Rabat (10) pour rampe d'accès de navire (20) comprenant une pluralité de sections de rabat (1) selon l'une quelconque des revendications 1 à 8.

10. Rabat selon la revendication 9, **caractérisé en ce que** la section de rabat (1) est fixée au rabat (10) à l'aide d'une rondelle concave (16) et d'une rondelle convexe (17).

11. Rampe d'accès de navire (20), **caractérisée en ce que** la rampe comprend une pluralité de rabats (10) selon la revendication 9 ou 10.
